# EUROPÄISCHE PATENTANMELDUNG

(11) **EP 1 505 532 A2**
(43) Veröffentlichungstag der Anmeldung: **09.02.2005**
(21) Anmeldenummer: 04016039.2
(22) Anmeldetag: 08.07.2004
(51) Int. Cl.: G06K 7/10

(54) **Erkennungseinrichtung für mit maschinenlesbaren Daten versehene Gegenstände**

(30) Priorität: 05.08.2003 DE 20312065 U
(71) Anmelder: Wincor Nixdorf International GmbH, 33106 Paderborn (DE)
(72) Erfinder: Baitz, Günter, 13629 Berlin (DE); Kamin, Hartmut, 10585 Berlin (DE)

(57) **Zusammenfassung**

Erkennungseinrichtung für mit maschinenlesbaren Daten, insbesondere mit einem Strichcodelabel oder RFID-Tag versehene Gegenstände, mit einer in einem Erfassungsgerät für die maschinenlesbaren Daten integrierten elektronischen Kamera, mit einem Speicher, in dem eine Mehrzahl von maschinenlesbaren Daten und zumindest ein Bild des zugehörigen Gegenstandes gespeichert sind, und mit einem Vergleicher, der ein von der Kamera erfasstes Gegenstandsbild oder zumindest einen Teil davon mit einem in dem Speicher gespeicherten Bild vergleicht, welches unter Adressierung durch die zugleich mit der Bilderfassung gelesenen maschinenlesbaren Daten aus dem Speicher abgerufen wird.

## Beschreibung

Die Erfindung betrifft eine Erkennungseinrichtung für mit maschinenlesbaren Daten versehene Gegenstände.

Beispielsweise in Warenhäusern sind die angebotenen Waren im allgemeinen mit maschinenlesbaren Warenkennzeichnungen, insbesondere Strichcodelabeln aber auch RFID-Tags versehen. An Kassenplätzen kann es beim Lesen der Warenkennzeichnungen durch eine Kassierperson oder einen Kunden zu unbeabsichtigten oder auch in betrügerischer Absicht manipulierten Fehllesungen kommen.

In der DE 299 17 238 U1 ist daher bereits vorgeschlagen worden, in den Kassenplatz eine elektronische Kamera einzubauen. Diese hat aber keinen räumlichen Bezug zu einer Leseeinrichtung für maschinenlesbare Daten, so dass bei entsprechender Handhaltung die Ware nicht erfasst werden kann, deren Warenkennzeichen gerade gelesen wird.

Aufgabe der Erfindung ist es daher, eine Anordnung zu schaffen, mit der eine Ware während des Lesens ihrer Warenkennzeichnung optisch zuverlässig erfasst werden kann.

Die Aufgabe wird durch die Merkmale des Anspruchs 1 gelöst.

Die erfindungsgemäße Erkennungseinrichtung für mit maschinenlesbaren Daten, insbesondere mit einem Strichcodelabel oder RFID-Tags versehene Gegenstände, ist mit einer in eine Erfassungseinrichtung für die maschinenlesbaren Daten integrierten elektronischen Kamera ausgestattet. Ferner ist ein Datenspeicher vorgesehen, in dem eine Mehrzahl von maschinenlesbaren Daten und zumindest ein Bild des zugehörigen Gegenstandes gespeichert sind. In einem Vergleicher wird ein von der Kamera erfasstes Gegenstandsbild oder zumindest ein Teil davon mit einem gespeicherten Bild verglichen, welches mit Hilfe der zugleich mit der Bilderfassung gelesenen maschinenlesbaren Daten aus dem Speicher abgerufen wird.

Gemäß einer bevorzugten Ausbildung der Erfindung stimmt die Abtastrichtung der Leseeinrichtung mit dem Aufnahmebereich der Kamera überein.

Wenn der zu erfassende Gegenstand und die Erfassungseinrichtung einander angenähert werden, kommt der Gegenstand automatisch in den Aufnahmebereich der Kamera. Die bildliche Aufnahme des Gegenstandes kann besonders schnell erfolgen, da immer die die maschinenlesbare Warenkennzeichnung tragende Seite des Gegenstandes der Erfassungseinrichtung zugekehrt wird. Ebenso braucht auch nur die Abbildung dieser Seite in dem Speicher abgelegt zu werden. Dadurch wird die Bilddatenmenge klein gehalten und der Vergleich beschleunigt.

Oft genügt es auch, nur ein charakteristisches bildliches Merkmal des Gegenstandes, beispielsweise einen Schriftzug oder das Bild einer auf dem Gegenstand aufgebrachten Handelsmarke in dem Speicher abzulegen. Dadurch wird die Datenmenge noch weiter reduziert und der Vergleich noch weiter beschleunigt.

Weitere Merkmale und Vorteile der Erfindung ergeben sich aus der folgenden Beschreibung, welche in Verbindung mit den beigefügten Zeichnungen die Erfindung an Hand zweier Ausführungsbeispiele erläutert.

Es zeigt
- Fig. 1: einen Fensterscanner in Draufsicht,
- Fig. 2: ein Blockschaltbild eines Vergleichers,
- Fig. 3: einen Handscanner in Vorderansicht.

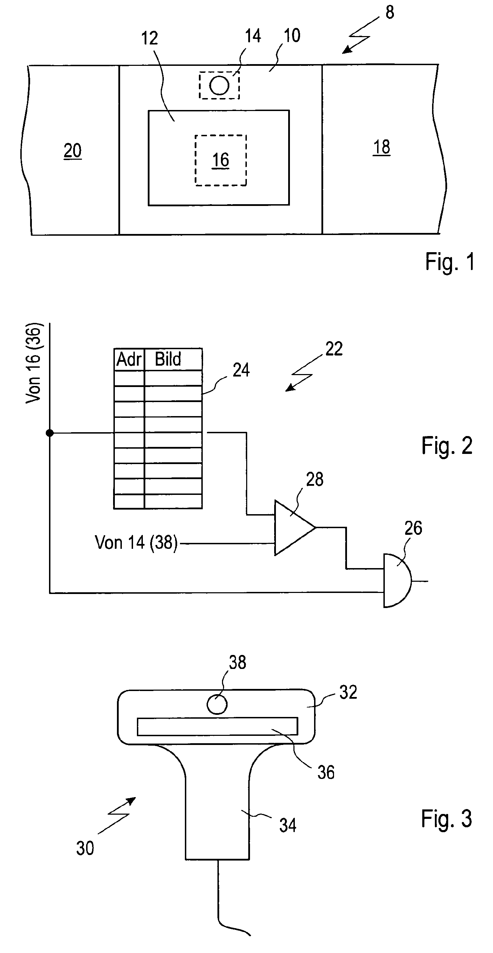

In Fig. 1 ist ein Fensterscanner 10 eines in einem Warenhaus aufgestellten sonst nicht näher ausgeführten Kassenplatzes 8 in Draufsicht dargestellt. Oberhalb eines Scannerfensters 12 ist eine elektronische Kamera 14 in der Zeichnung zu erkennen. Die Abtastrichtung einer unterhalb des Scannerfensters 12 eingebauten Leseeinrichtung 16 stimmt mit dem Aufnahmebereich der Kamera 14 überein. Die Kamera 14 kann auch unter dem Scannerfenster 12 eingebaut sein. Der Fensterscanner 10 ist zwischen einer Zuförderbahn 18 und einer Abförderbahn 20 des Kassenplatzes 8 eingebaut.

Fig. 2 zeigt ein Blockschaltbild eines Vergleichers 22. Dieser umfasst einen Speicher 24, in dem die Bilder aller in dem Warenhaus verfügbaren Gegenstände unter der Adresse von deren Gegenstandsnummer gespeichert sind. Es ist auch möglich, nur ein Teilbild des Gegenstandes, z.B. nur dessen die maschinenlesbaren Daten enthaltende Seite oder einen charakteristischen Schriftzug oder die Handelsmarke in dem Speicher 24 abzulegen.

Die Ausgangsinformation der Leseeinrichtung 16, also eine Gegenstandsnummer, wird zum einen einem Eingang einer Gatter-Schaltung 26 und zum anderen dem Adresseingang des Speichers 24 zugeführt. Der Ausgang des Speichers 24 gibt daraufhin die Bilddaten des mit der Leseeinrichtung 16 erfassten Gegenstandes an einen ersten Eingang eines Komparators 28. Der andere Eingang des Komparators 28 wird mit dem Ausgangssignal der Kamera 14, ggf. nach Durchlaufen eines Mustererkennungsverfahrens, beaufschlagt. Stimmen beide Bildinformationen überein, wird die Gatter-Schaltung 26 geöffnet, an deren Ausgang daraufhin die Gegenstandsnummer des zuvor erfassten Gegenstandes erscheint. Diese kann zur weiteren Verarbeitung beispielsweise einer Registrierkasse zugeführt werden. Es ist also zu erkennen, dass eine von der Leseeinrichtung erfasste Gegenstandsnummer nur dann an zur weiteren Verarbeitung weitergegeben wird, wenn das gespeicherte Bild des Gegenstandes mit dem von der Kamera 16 erfassten Bild übereinstimmt.

In Fig. 3 ist ein Handscanner 30 in Vorderansicht dargestellt. Er besteht aus einem Kopfteil 32 und einem Handgriff 34. In dem Kopfteil 32 ist ein an sich bekannter Zeilenscanner 36 und darüber eine zweite elektronischen Kamera 38 eingebaut. Eine aus dem Handgriff 34 führende Datenleitung kann ebenfalls auf den Vergleicher 22 gegeben werden. In diesem wird, wie oben für die Anordnung nach Fig. 1 beschrieben, ein von der zweiten Kamera 38 erfasstes Gegenstandsbild mit einem gespeicherten Bild verglichen, welches mit Hilfe der zugleich mit der Bilderfassung von dem Zeilenscanner 36 gelesenen Gegenstandsnummer aus dem Speicher 24 abgerufen wird.

## Patentansprüche

1. Erkennungseinrichtung für mit maschinenlesbaren Daten, insbesondere mit einem Strichcodelabel oder RFID-Tag versehene Gegenstände, mit einer Erfassungseinrichtung (10; 30) umfassend eine Leseeinrichtung (16; 36) zum Lesen der maschinenlesbaren Daten und mit einem Speicher (24), in dem eine Mehrzahl von maschinenlesbaren Daten gespeichert sind, **dadurch gekennzeichnet, dass** eine elektronische Kamera (14; 38) in die Erfassungseinrichtung (10; 30) integriert ist, und dass zumindest ein Bild der zu erfassenden Gegenstände in dem Speicher (24) den maschinenlesbaren Daten zugeordnet ist, wobei ein Vergleicher (22) vorgesehen ist, der ein von der Kamera (14; 38) erfasstes Gegenstandsbild oder zumindest einen Teil davon mit einem der in dem Speicher (24) gespeicherten Bilder vergleicht, welches unter Adressierung durch die zugleich mit der Bilderfassung gelesenen maschinenlesbaren Daten aus dem Speicher (24) abgerufen wird.

2. Erkennungseinrichtung nach Anspruch 1, bei der als Bild nur ein Teil des Gegenstandes in dem Speicher (24) abgelegt ist.

3. Erkennungseinrichtung nach Anspruch 1 oder 2, bei der nur ein charakteristisches bildliches Merkmal des Gegenstandes in dem Speicher (24) abgelegt ist.

4. Erfassungseinrichtung (10; 30) zum Lesen von maschinenlesbaren Daten, insbesondere Strichcodelabel oder RFID-Tag, mit einer Leseeinrichtung (16; 36), **gekennzeichnet durch** eine integrierte elektronische Kamera (14; 38), wobei die Abtastrichtung der Leseeinrichtung (16; 36) mit dem Aufnahmebereich der Kamera (14; 38) übereinstimmt.

5. Erfassungseinrichtung nach Anspruch 4, welche als Fensterscanner (10) ausgebildet ist.

6. Erfassungseinrichtung nach Anspruch 5, bei der die Kamera (14) neben dem Scannerfenster (12) des Fensterscanners (10) angeordnet ist.

7. Erfassungseinrichtung nach Anspruch 5, bei der die Kamera unter dem Scannerfenster (12) des Fensterscanners (10) angeordnet ist.

8. Erfassungseinrichtung nach Anspruch 4, welche als Handscanner (30) ausgebildet ist.
